# EUROPÄISCHE PATENTSCHRIFT

(11) **EP 1 916 060 B1**
(45) Veröffentlichungstag und Bekanntmachung des Hinweises auf die Patenterteilung: **06.05.2009**
(21) Anmeldenummer: 07019598.7
(22) Anmeldetag: 08.10.2007
(51) Int. Cl.: B24B 13/04, B24B 13/06, B23B 29/26, B44B 3/04, B44B 3/06

(54) **Maschine zur Bearbeitung von optischen Werkstücken, insbesondere von Kunststoff-Brillengläsern**
Machine for machining optical work pieces, in particular plastic spectacle lenses
Machine destinée au traitement de pièces optiques, en particulier de verres solaires en plastique

(30) Priorität: 26.10.2006 DE 102006051006
(43) Veröffentlichungstag der Anmeldung: 30.04.2008
(73) Patentinhaber: Satisloh AG, 6340 Baar (CH)
(72) Erfinder: Meyer, Urs, Dr., 5600 Lenzburg (CH); Savoie, Marc, 35578 Wetzlar (DE)
(74) Vertreter: Oppermann, Mark

(56) Entgegenhaltungen:
- EP-A- 1 449 616
- EP-A- 1 719 584
- WO-A-97/13603
- DE-A1- 10 224 126
- DE-U- 7 419 553
- US-A- 5 485 771
- US-A1- 2004 045 419

## Beschreibung

### TECHNISCHES GEBIET

Die vorliegende Erfindung bezieht sich auf eine Maschine zur Bearbeitung von optischen Werkstücken, insbesondere von Kunststoff-Brillengläsern, gemäß dem Oberbegriff des Patentanspruchs 1.

### STAND DER TECHNIK

Üblicherweise liegt bei der Bearbeitung von Kunststoff-Brillengläsern ein aus Kunststoff spritzgegossener Brillenglasrohling, auch "Blank" genannt, vor, der eine standardisierte endbearbeitete konvexe Außenfläche mit z.B. sphärischer, asphärischer oder progressiver Form aufweist. Die in der Regel konkaven Innen- bzw. Rezeptflächen erhalten mittels spanender Bearbeitung eine sphärische, asphärische, torische, atorische, progressive oder Freiformgeometrie (Gleitsichtflächen), je nach der gewünschten optischen Wirkung. Der typische konventionelle Ablauf bei der Innenflächenbearbeitung sieht nach dem Aufblocken des Brillenglasrohlings mit seiner Außenfläche auf einem Blockstück einen Fräs- oder Drehbearbeitungsprozeß zur Herstellung der optisch aktiven Form vor, in der Regel gefolgt von einem Feinschleif- oder Polierprozeß zur Erzielung der notwendigen Oberflächengüte, der bei einem drehbearbeiteten Brillenglas aber auch entbehrlich sein kann.

Für den Drehbearbeitungsprozeß werden im Stand der Technik auch sogenannte Fast-Tool-Drehmaschinen eingesetzt, bei denen ein Drehmeißel entweder linear reziprozierend (siehe z.B. die WO-A-02/06005 oder die gattungsbildende WO-A-97/13603) oder rotativ (vgl. beispielsweise die WO-A-99/33611) hochdynamisch bewegt werden kann, so daß nicht-rotationssymmetrische Linsenflächen im Drehverfahren mit sehr guten Flächenqualitäten erzeugt werden können.

Nach Herstellung der Brillenglasfläche mit der gewünschten optischen Wirkung muß das Brillenglas insbesondere für Folgebearbeitungen, namentlich das sogenannte "Edgen", d.h. die Randbearbeitung des Brillenglases zur Anpassung an das jeweilige Brillengestell, mit einer Kennzeichnung versehen werden. So muß z.B. ein Gleitsicht-Brillenglas nach der DIN EN ISO 8980-2 mindestens mit den folgenden Angaben dauerhaft gekennzeichnet sein: a) Markierung zur Ausrichtung; diese muß mindestens aus zwei Markierungen in einem Abstand von 34 mm bestehen und symmetrisch zu einer vertikalen Ebene durch den Anpaßpunkt oder den Prismenbezugspunkt angeordnet sein; b) Angabe der Nahzusatzwirkung, in Dioptrien; und c) Angabe des Herstellers oder Lieferanten oder des Handelsnamens oder Warenzeichens. Als optionale, nicht dauerhafte Kennzeichnungen empfiehlt diese Norm ferner weitere Markierungen zur Ausrichtung, für den Fernbezugspunkt, für den Nahbezugspunkt, für den Anpaßpunkt und für den Prismenbezugspunkt.

Während die dauerhaften Kennzeichnungen üblicherweise durch permanente Gravuren erfolgen, von denen die Funktionsgravuren, d.h. die vom Optiker für die Ausrichtung und Zuordnung des jeweiligen Brillenglases benötigen Gravuren in der Regel so fein ausgeführt sind, daß sie unter normalem Licht mit bloßem Auge nicht zu erkennen sind, werden die nicht dauerhaften Kennzeichnungen z.B. mittels eines temporären Stempelbilds ausgeführt, welches im Zuge der Fertigbearbeitung des Brillenglases wieder entfernt wird.

Darüber hinaus bieten manche Brillenglashersteller auch dauerhafte individuelle Gravuren auf dem Brillenglas an, z.B. die Gravur der Initialen des Brillenglasträgers, die die Maßfertigung der Brillengläser unterstreichen soll und an einer Stelle des Brillenglases angebracht wird, wo sie das Sehen nicht beeinträchtigt.

Das Anbringen der permanenten Gravuren erfolgt in der Regel in einer von der eigentlichen Bearbeitungsmaschine separaten Graviermaschine, in der ein drehend angetriebenes Gravierwerkzeug mit geometrisch bestimmter Schneide (Fräswerkzeug) oder geometrisch unbestimmter Schneide (Schleifwerkzeug) in definiertem Bearbeitungseingriff über die zu markierende Brillenglasfläche geführt wird, um die Gravur auszubilden. Es sind aber auch Graviermaschinen bekannt, in denen die Gravur mittels eines Laserstrahls am Brillenglas angebracht wird.

Um für die Anbringung von Markierungen auf der Brillenglasfläche die zusätzliche Verwendung spezieller Diamant-Werkzeuge oder hochenergetischer Laserstrahlung zu vermeiden, schlägt die gattungsbildende WO-A-97/13603 vor, diese Markierungen während des Bearbeitungsprozesses mittels des Werkzeugs, mit dem auch die Drehbearbeitung erfolgt, direkt mitzuerzeugen, wodurch alle Reproduzierbarkeitsprobleme, wie sie bei jedem Maschinenwechsel auftreten, entfallen sollen. Für die eigentliche Drehbearbeitung muß dieses Werkzeug eine Drehschneide mit einer definierten Schneidengeometrie aufweisen. Mit einer solchen Drehschneide lassen sich jedoch nur Markierungen erzeugen, die aus feinen Strichen bestehen, welche parallel zur Schneidkante verlaufen. Wünschenswert wäre es, wenn sich hier, wie in den bekannten Graviermaschinen auch, jegliche graphische Symbole, wie Buchstaben, Zahlen, Firmenlogos etc. detailliert erzeugen ließen.

### DARSTELLUNG DER ERFINDUNG

Ausgehend vom Stand der Technik nach der WO-A-97/13603 liegt der Erfindung die Aufgabe zugrunde, eine Maschine zur Bearbeitung von optischen Werkstücken, insbesondere von Kunststoff-Brillengläsern mit einer Fast-Tool-Anordnung bereitzustellen, mittels der auch beliebige, fein detaillierte Markierungen an dem Werkstück angebracht werden können, ohne daß hierfür das Werkstück um- bzw. abgespannt werden muß.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 12.

Erfindungsgemäß hat eine Maschine zur Bearbeitung von optischen Werkstücken, insbesondere von Kunststoff-Brillengläsern, die eine Werkstückspindel, mittels der das Werkstück um eine Werkstück-Drehachse drehend antreibbar ist, und eine Fast-Tool-Anordnung aufweist, mittels der ein Drehmeißel in Richtung des Werkstücks und davon weg bewegbar ist, wobei die Werkstückspindel und die Fast-Tool-Anordnung zudem in einer Richtung quer zur Werkstück-Drehachse relativ zueinander bewegbar sind, einen mit der Fast-Tool-Anordnung wirkverbundenen Werkzeughalter, der den Drehmeißel und von diesem in der Richtung quer zur Werkstück-Drehachse beabstandet einen Gravierstichel trägt, dessen dem Werkstück zugewandtes Ende im wesentlichen punktförmig ist, wobei der Gravierstichel mittels der Fast-Tool-Anordnung über den Werkzeughalter hochdynamisch in Richtung des Werkstücks und davon weg bewegbar ist, so daß insbesondere durch nadelnden Eingriff des Gravierstichels mit dem Werkstück an diesem eine Markierung erzeugbar ist.

Mit dem an dem Werkzeughalter neben dem bzw. zum Drehmeißel parallel angeordneten Gravierstichel kann somit im Arbeitsraum ein und derselben Bearbeitungsmaschine zeitlich unmittelbar anschließend an die eigentliche Drehbearbeitung das Werkstück unter Nutzung ein und derselben Fast-Tool-Anordnung mit einer permanenten Gravur versehen werden, ohne daß das Werkstück hierfür auf eine separate Graviermaschine umgespannt werden muß, was einem schnellen und genauen Bearbeitungsprozeß förderlich ist. Da hierbei ein vom Drehmeißel verschiedenes Werkzeug eingesetzt wird, nämlich der Gravierstichel, dessen dem Werkstück zugewandtes Ende im wesentlichen punktförmig ist, ist, anders als beim gattungsbildenden Stand der Technik, die erzeugbare Geometrie der Markierung nicht durch die Geometrie des Drehmeißels limitiert. Insbesondere durch nadelnden Eingriff des spitzen Gravierstichels mit dem Werkstück, d.h. einer Gravierbearbeitung, bei der der Gravierstichel wie ein Specht an einem Baum in schneller Abfolge auf das Werkstück auftrifft, lassen sich sehr fein detaillierte Gravuren erzeugen. Ferner hat bei der erfindungsgemäßen Maschine das Gravieren des Werkstücks keinen Verschleiß am Drehmeißel zur Folge, wie auch das Drehbearbeiten des Werkstücks keinen Verschleiß am Gravierstichel zur Folge hat, was die Werkzeugstandzeit gegenüber dem gattungsbildenden Stand der Technik erhöht. Dies ist insbesondere vor dem Hintergrund von Bedeutung, daß ein stumpfer Gravierstichel das Material des Werkstücks bei der Gravierbearbeitung eventuell nur wegdrückt, das Material dann aber wieder allmählich zurückkommt, was vor allem bei dem Kunststoffmaterial CR39 zu einer unerwünschten "Alterung" bzw. einem "Verblassen" des Gravurbildes führen kann.

Wenngleich es insbesondere hinsichtlich einer möglichst einfachen Mathematik bei der Regelung der Bewegungsachsen bevorzugt ist, wenn der Gravierstichel mittels der Fast-Tool-Anordnung über den Werkzeughalter lagegeregelt in axialer Richtung zustellbar ist, kann der Grundgedanke der vorliegenden Erfindung, nämlich die Parallelanordnung eines Drehmeißels und eines Gravierstichels an einem gemeinsamen, von der Fast-Tool-Anordnung angetriebenen Werkzeughalter, auch an einer Maschine mit einer rotativen Fast-Tool-Anordnung, wie sie etwa aus der WO-A-99/33611 bekannt ist, realisiert werden.

Obschon die Spitze des Gravierstichels grundsätzlich auch pyramidenartig mit z.B. drei- oder viereckiger Grundfläche ausgebildet werden kann, ist es im Hinblick auf ein einfaches Nachschärfen bzw. -spitzen des Gravierstichels bevorzugt, wenn der Gravierstichel eine sich zu seinem dem Werkstück zugewandten Ende hin im wesentlichen kegelförmig verjüngende Spitze aufweist.

In Abhängigkeit vom Werkstoff des zu markierenden Werkstücks sind verschiedene Materialien, z.B. gehärteter Stahl, PKD, CVD oder Naturdiamant für die Spitze des Gravierstichels denkbar. Insbesondere im Hinblick auf möglichst lange Standzeiten des Gravierstichels bei der Bearbeitung von Kunststoff-Brillengläsern und moderate Herstellungskosten für den Gravierstichel ist es jedoch bevorzugt, wenn die das dem Werkstück zugewandte Ende des Gravierstichels ausbildende Spitze aus Hartmetall besteht.

Der bevorzugte Werkzeughalter der Maschine umfaßt eine Grundplatte, die an einem Pendelteil der Fast-Tool-Anordnung der Maschine befestigbar ist, und wenigstens zwei in einer Richtung quer zu einer Bewegungsrichtung dieses Pendelteils beabstandet an der Grundplatte angeordnete Aufnahmen, von denen eine der Befestigung des Drehmeißels dient, während die andere der Befestigungdes Gravierstichels dient. Dieser Werkzeughalter ermöglicht zum einen, wie bereits angesprochen, das sich zeitlich unmittelbar an die eigentliche Drehbearbeitung anschließende Gravieren des Werkstücks unter Nutzung ein und derselben Fast-Tool-Anordnung, ohne daß das Werkstück hierfür auf eine separate Graviermaschine umgespannt werden muß. Zum anderen kann dieser Werkzeughalter in vorteilhafter Weise den jeweiligen Bearbeitungserfordernissen entsprechend ggf. auch weitere Funktionselemente tragen, wie einen Taster für eine (in situ) Geometrieerfassung des Werkstücks in der Maschine oder einen weiteren Drehmeißel, so daß etwa ein Vordrehen mittels eines in der einen Aufnahme gehaltenen PKD- oder Hartmetall-Drehmeißels und ein sich daran anschließendes Fertigdrehen mittels eines ggf. in der anderen Aufnahme gehaltenen Naturdiamant-Drehmeißels erfolgen kann, ohne daß zwischenzeitlich ein Werkzeugwechsel oder ein Aufspannen des Werkstücks in einer anderen Maschine erfolgen muß.

Die Flexibilität des Werkzeughalters für die verschiedensten Bearbeitungs- bzw. Meßvorgänge in der Maschine kann ferner dadurch erhöht werden, daß die Aufnahmen zur lösbaren -- im Gegensatz zu einer unlösbaren -- Befestigung des Drehmeißels bzw. des jeweiligen Funktionselements ausgebildet werden.

Soll der vorbeschriebene Werkzeughalter an einer Maschine zum Einsatz kommen, wie sie z.B. in der DE-A-10 2005 021 638 derselben Anmelderin beschrieben wird, d.h. einer Maschine, bei der die Bewegungsrichtung des Pendelteils der Fast-Tool-Anordnung und die Werkstück-Drehachse parallel zueinander verlaufen, ist es zweckmäßig, wenn wenigstens die Aufnahme für den Drehmeißel höhenverstellbar bezüglich der Ebene, in der das Pendelteil bewegbar ist, an der Grundplatte angebracht ist, so daß die Höhe der Drehmeißelschneide bezüglich der Werkstück-Drehachse auf einfache Weise justiert werden kann.

Hierbei kann in einer zweckmäßigen Ausgestaltung vorgesehen sein, daß die Aufnahmen jeweils einen Halterbock aufweisen, wobei die Halterböcke bezüglich der Grundplatte wahlweise für Höhenjustagezwecke individuell und parallel zueinander längsverschiebbar sind. Dies ist insbesondere dann von Interesse, wenn ggf. beide Aufnahmen (auch) mit Drehmeißeln bestückt werden sollen, wobei die beschriebene Ausgestaltung auf einfache Weise eine individuelle Höhejustage der jeweiligen Drehmeißelschneide bezüglich der Werkstück-Drehachse ermöglicht. Eine Justage der Höhe der Gravierstichelspitze bezüglich der Werkstück-Drehachse ist jedenfalls dann nicht notwendig, wenn die Werkstückspindel im Drehwinkel geregelt wird und darüber hinaus eine positionsgeregelte Querbewegung zwischen Fast-Tool-Anordnung und Werkstückspindel erfolgen kann. In letzterem Fall kann nämlich über die erwähnten Bewegungsachsen jede Position auf dem Werkstück angefahren werden, die für eine Gravur in Frage kommt. Einzig die Werkstückmitte wäre nur dann anfahrbar, wenn eine exakte Höheneinstellung des Gravierstichels bezüglich der Werkstück-Drehachse gegeben ist. In der Praxis sind jedoch Gravuren in der Mitte einer optischen Linse oder eines Brillenglases nicht vorzusehen.

In einer besonders einfachen Ausgestaltung des vorbeschriebenen Werkzeughalters kann vorgesehen sein, daß die Aufnahmen jeweils eine Aufnahmebohrung aufweisen, in der der Drehmeißel bzw. der Gravierstichel lösbar geklemmt ist, etwa mittels einer Klemmschraube. Für eine reproduzierbare Genauigkeit beim Halten des Gravierstichels sowie ein einfaches Spannen desselben sind aber auch andere Möglichkeiten denkbar, beispielsweise die Verwendung eines auf der Grundplatte des Werkzeughalters angebrachten, kleinen handelsüblichen Hydrodehnfutters, d.h. eines hydrostatischen Spannfutters, wie es z.B. von der Firma Schunk Spanntechnik, Deutschland, erhältlich ist.

Im weiteren Verfolg des Erfindungsgedankens kann der Gravierstichel an der Aufnahme zur Befestigung des Gravierstichels mittels einer selbstzentrierenden kinematischen Kupplung anbringbar sein, was auf einfache Weise für eine wiederholbare genaue Positionierbarkeit des Gravierstichels am Werkzeughalter sorgt. Eine solche kinematische Kupplung ist prinzipiell aus der EP 0 865 338 B1 bekannt.

Im vorliegenden Fall kann die selbstzentrierende kinematische Kupplung drei Kugelkörper, drei Prismennuten und ein eine Haltekraft erzeugendes Element aufweisen, wobei die Kugelkörper unter 120° bezüglich einer Mittelachse der Aufnahme versetzt in einer Befestigungsfläche der Aufnahme eingelassen sind und über diese vorstehen, um mit den gleichermaßen winkelbeabstandeten Prismennuten in einer Halteplatte des Gravierstichels einzugreifen, und wobei das die Haltekraft erzeugende Element den Gravierstichel lösbar in diesem Eingriff hält. Wenngleich dies die derzeit bevorzugte Ausgestaltung einer kinematischen Kupplung für den Gravierstichel darstellt, ist auch eine inverse Anordnung denkbar, mit den Kugelkörpern an der Halteplatte des Gravierstichels und den Prismennuten in der werkzeughalterseitigen Befestigungsfläche der Aufnahme. In beiden Fällen kann das die Haltekraft erzeugende Element entweder am Werkzeughalter bzw. an dessen Grundplatte oder am Gravierstichel bzw. dessen Halteplatte angeordnet sein.

Schließlich ist es bevorzugt, wenn das die Haltekraft erzeugende Element einen Magneten, insbesondere einen Permanentmagneten aufweist, was einen einfachen Wechsel des Gravierstichels gegen einen anderen Gravierstichel gestattet.

### KURZE BESCHREIBUNG DER ZEICHNUNGEN

Im folgenden wird die Erfindung anhand bevorzugter Ausführungsbeispiele unter Bezugnahme auf die beigefügten, teilweise schematischen Zeichnungen näher erläutert, in denen gleiche Bezugszeichen gleiche bzw. entsprechende Teile kennzeichnen. In den Zeichnungen zeigen:
- Fig. 1: eine perspektivische, geschnittene Ansicht einer erfindungsgemäßen Maschine zur Bearbeitung von optischen Werkstücken, namentlich Kunststoff-Brillengläsern, von schräg vorne/oben, die werkzeugmäßig mit einer Fräs- bzw. Cribbing-Einheit und einer FastTool-Anordnung ausgestattet ist;
- Fig. 2: eine vergrößerte Draufsicht auf die Maschine gemäß Fig. 1 im Bereich der Fräs- bzw. Cribbing-Einheit und der Fast-Tool-Anordnung;
- Fig. 3: eine perspektivische Ansicht des an der Fast-Tool-An-ordnung der Maschine gemäß Fig. 1 verwendeten Werkzeughalters mit einem Drehmeißel und einem Gravierstichel;
- Fig. 4: eine Unteransicht des Werkzeughalters gemäß Fig. 3 (von schräg vorne in Fig. 3);
- Fig. 5: eine Seitenansicht des Werkzeughalters gemäß Fig. 3 (von links in Fig. 4);
- Fig. 6: eine Vorderansicht des Werkzeughalters gemäß Fig. 3 (von oben in Fig. 4);
- Fig. 7: eine Draufsicht auf ein Brillenglas, welches mit der erfindungsgemäßen Maschine dauerhaft graviert wurde;
- Fig. 8: eine perspektivische Ansicht eines zu dem in den Fig. 1 bis 6 gezeigten Werkzeughalter alternativen Werkzeughalters, mit zwei Drehmeißeln und einem Gravierstichel;
- Fig. 9: eine Unteransicht des Werkzeughalters gemäß Fig. 8 (von unten in Fig. 8);
- Fig. 10: eine Seitenansicht des Werkzeughalters gemäß Fig. 8 (von links in Fig. 9);
- Fig. 11: eine Vorderansicht des Werkzeughalters gemäß Fig. 8 (von oben in Fig. 9), wobei der Gravierstichel vom Werkzeughalter abgenommen und ein Magneteinsatz als ein die Haltekraft für den Gravierstichel erzeugendes Element aus einer Bohrung des Werkzeughalters herausgenommen wurde;
- Fig. 12: eine der Fig. 8 im wesentlichen entsprechende perspektivische Ansicht des Werkzeughalters gemäß Fig. 8, wobei der Gravierstichel vom Werkzeughalter abgenommen wurde, so daß der über eine Grundplatte des Werkzeughalters vorstehende Magneteinsatz zur Erzeugung der Haltekraft für den Gravierstichel zu erkennen ist;
- Fig. 13: eine perspektivische Ansicht des Magneteinsatzes gemäß Fig. 12 und des Gravierstichels gemäß den Fig. 8 bis 10 sowie eines gegen diesen Gravierstichel austauschbaren Tasters, zur Veranschaulichung einer kinematischen Kupplung, mittels der wahlweise der Gravierstichel oder der Taster am Werkzeughalter anbringbar ist;
- Fig. 14: eine Längsschnittansicht durch den Magneteinsatz gemäß den Fig. 12 und 13; und
- Fig. 15: eine der Fig. 8 im wesentlichen entsprechende perspektivische Ansicht des Werkzeughalters gemäß Fig. 8, wobei der Gravierstichel gemäß den Fig. 8 bis 10 und 13 gegen den Taster gemäß Fig. 13 ausgetauscht wurde.

### DETAILLIERTE BESCHREIBUNG DER AUSFÜHRUNGSBEISPIELE

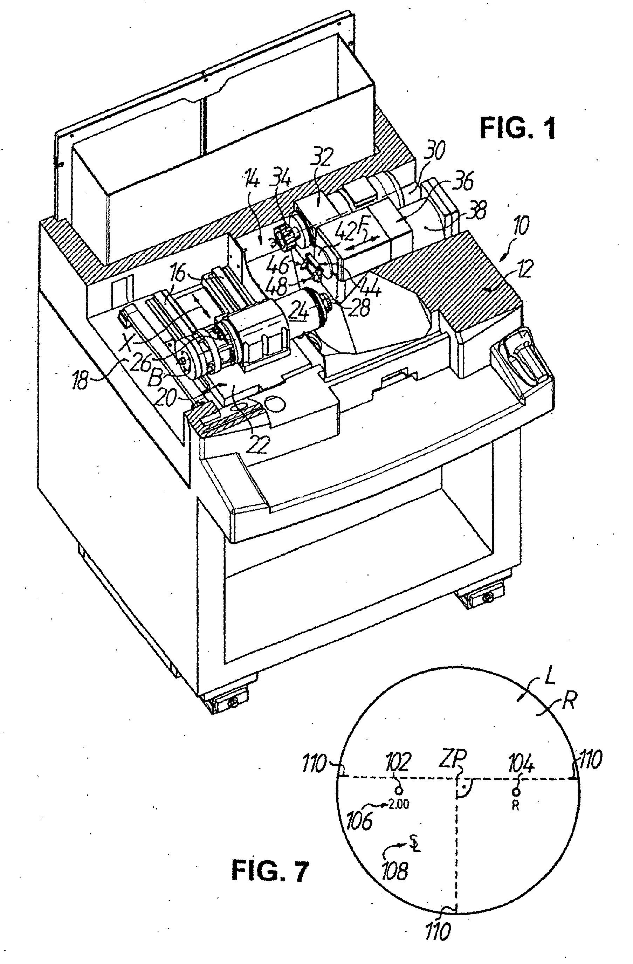

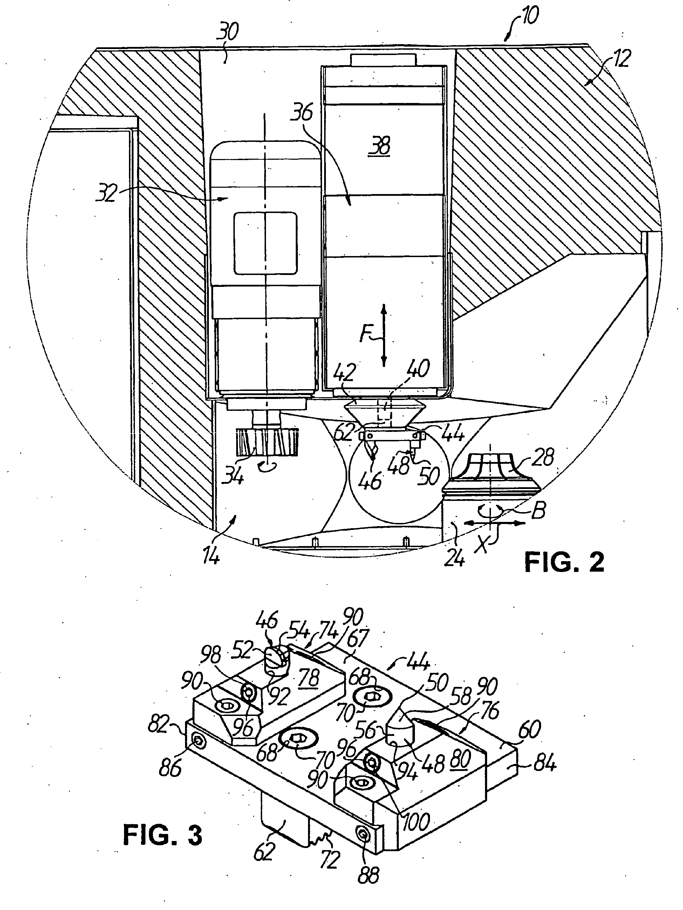

Die Fig. 1 und 2 zeigen in schematischer Darstellung eine CNCgeregelte Maschine 10 insbesondere zur Flächenbearbeitung von Brillengläsern L aus Kunststoff (siehe Fig. 7), bei der das aus einem Polymerbeton einteilig gegossene Maschinengestell 12 im Bereich des Maschinenoberteils geschnitten ist, um den Blick in einen Arbeitsraum bzw. Bearbeitungsbereich 14 der Maschine 10 freizugeben. Die Maschine 10 als solche, ohne Gravierfunktion, wurde schon in der DE-A-10 2005 021 638 derselben Anmelderin beschrieben, auf die hiermit zum grundsätzlichen Aufbau der Maschine und deren Funktion ergänzend Bezug genommen wird.

Auf der in Fig. 1 linken Seite des Bearbeitungsbereichs 14 sind zwei Führungsschienen 16, die sich in einer (horizontalen) Breitenrichtung der Maschine 10 parallel zueinander erstrecken, auf einer in Fig. 1 oberen Montagefläche 18 des Maschinengestells 12 befestigt. Ein X-Schlitten 20, der durch zugeordnete CNC-Antriebs- und Steuerelemente (nicht gezeigt) in beiden Richtungen einer X-Achse CNC-lagegeregelt verstellbar ist, ist verschiebbar auf den Führungsschienen 16 gelagert.

Auf einer in Fig. 1 oberen Montagefläche 22 des X-Schlittens 20 ist eine Werkstückspindel 24 befestigt, die mittels eines Elektromotors 26 in der Drehzahl und dem Drehwinkel CNC-geregelt um eine Werkstück-Drehachse B drehend antreibbar ist. An der Werkstückspindel 24, genauer deren in den Bearbeitungsbereich 14 hineinragenden Ende ist eine Werkstückaufnahme 28 vorgesehen, an der auf an sich bekannte Weise das auf einem Blockstück aufgeblockte Brillenglas L (in den Fig. 1 und 2 nicht gezeigt) für die Bearbeitung insbesondere der Rezeptfläche R des Brillenglases L derart anbringbar ist, daß es gleichachsig mit der Werkstückspindel 24 drehen kann.

Auf der in Fig. 1 rechten Seite des Bearbeitungsbereichs 14 sind auf einer weiteren horizontalen Montagefläche 30 des Maschinengestells 12 erstens eine optionale Fräseinheit 32 für die Randbearbeitung des Brillenglases L, genauer dessen an sich bekannte Vorrandung -- auch Cribbing genannt -- mittels eines drehend antreibbaren Fräswerkzeugs 34, und zweitens eine Fast-Tool-Anordnung 36 für die drehende Bearbeitung der Rezeptfläche R des Brillenglases L nebeneinander montiert.

Bei der Randbearbeitung kann mittels des rotierenden Fräswerkzeugs 34 eine (Vor)Bearbeitung des Brillenglasrohlings z.B. auf eine Umfangskontur vorgenommen werden, die der durch die Brillengestellform vorgegebenen Umfangskontur schon weitgehend entspricht, wobei von der Kreisform abweichende Umfangskonturen durch entsprechendes dynamisches Verfahren des die Werkstückspindel 24 tragenden X-Schlittens 20 in der X-Achse, d.h. auf die Fräseinheit 32 zu bzw. davon weg während eines Umlaufs des Brillenglasrohlings erzeugbar sind.

In den Fig. 1 und 2 vor bzw. neben der Fräseinheit 32 ist die Fast-Tool-Anordnung 36 vorgesehen. Wie etwa aus der WO-A-02/06005 bekannt ist, weist die Fast-Tool-Anordnung 36 einen Aktuator 38 und ein zugeordnetes Pendelteil 40 (auch "Shuttle" genannt) auf. Letzteres ist in Fig. 1 durch einen Faltenbalg 42 verdeckt, in Fig. 2 aber mit gestrichelten Linien angedeutet. Der innere Aufbau der hier gezeigten Fast-Tool-Anordnung 36 ist in der DE-A-10 2005 052 314 derselben Anmelderin detailliert beschrieben, auf die hiermit diesbezüglich ausdrücklich Bezug genommen wird. Das Pendelteil 40 der Fast-Tool-Anordnung 36 ist vermittels des Aktuators 38 in beiden Richtungen einer Fast-Tool-Achse F axial bewegbar. Hierbei ist die Lage bzw. der Hub des Pendelteils 40 mittels CNC regelbar. Wie insbesondere die Fig. 2 zeigt, verlaufen die Drehachse der Fräseinheit 32, die Fast-Tool-Achse F und die Werkstück-Drehachse B parallel zueinander, während in Relation dazu die X-Achse des X-Schlittens 20 in einem rechten Winkel verläuft.

Wie nachfolgend noch näher beschrieben werden wird, ist mit der Fast-Tool-Anordnung 36 ein Werkzeughalter 44 wirkverbunden, der einen Drehmeißel 46 und von diesem in einer Richtung quer zur Werkstück-Drehachse B beabstandet (siehe Fig. 2) einen Gravierstichel 48 trägt, dessen dem Brillenglas L bzw. der Werkstückspindel 24 zugewandtes Ende 50 im wesentlichen punktförmig ist. Im Ergebnis ist der Gravierstichel 48 mittels der Fast-Tool-Anordnung 36 über den Werkzeughalter 44 hochdynamisch in Richtung des Brillenglases L und davon weg bewegbar, so daß insbesondere durch nadelnden Eingriff des Gravierstichels 48 mit dem Brillenglas L an diesem eine Markierung erzeugbar ist, wie ebenfalls noch näher erläutert werden wird.

Gemäß den Fig. 3 bis 6 ist an dem Drehmeißel 46 ein Schneidplättchen 52 ggf. lösbar oder als Beschichtung angebracht, das eine Schneidkante 54 ausbildet und den jeweiligen Erfordernissen entsprechend, insbesondere spezifisch für den zu bearbeitenden Werkstoff, aus polykristallinem Diamant (PKD), CVD, Naturdiamant oder aber auch Hartmetall mit oder ohne Verschleißschutz-Beschichtung bestehen kann.

Mittels der Fast-Tool-Anordnung 36 kann die Rezeptfläche R des Brillenglases L drehend bearbeitet werden, was in an sich bekannter Weise unter Regelung der Bewegung des Brillenglases L in der X-Achse, unter Regelung der Bewegung des bearbeitenden Drehmeißels 46 in der F-Achse sowie unter Regelung der Drehbewegung des Brillenglases L um die Werkstück-Drehachse B erfolgt. Bei dieser Drehbearbeitung sind Flächenqualitäten erzielbar, die fast der Flächenqualität entsprechen, welche mit herkömmlichen Polierverfahren erzielbar ist.

Weitere Details des Werkzeughalters 44 und des daran lösbar montierten Gravierstichels 48 sind den Fig. 3 bis 6 zu entnehmen. Demgemäß hat der Gravierstichel 48 in seiner einfachsten Ausgestaltung einen zylindrischen Grundkörper 56, an den sich eine sich zu dem im wesentlichen punktförmigen Ende 50 hin im wesentlichen kegelförmig verjüngende Spitze 58 anschließt. Hierbei besteht vorzugsweise wenigstens die das dem Brillenglas L zugewandte Ende 50 des Gravierstichels 48 ausbildende Spitze 58 aus Hartmetall.

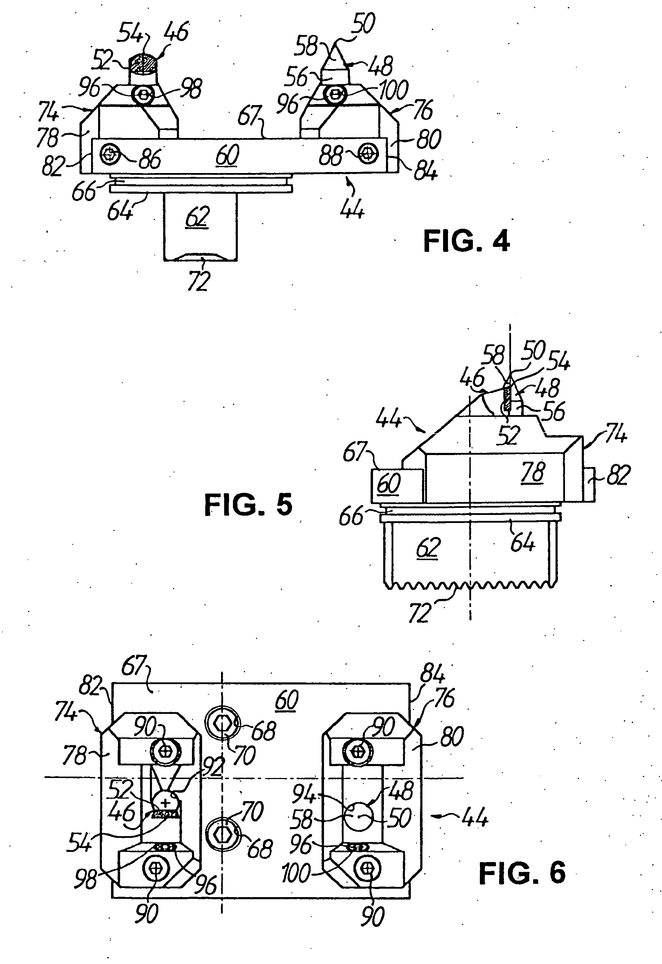

Der Werkzeughalter 44 hat eine in der Vorderansicht gemäß Fig. 6 rechteckige Grundplatte 60 aus z.B. einer Aluminium-Legierung, die über ein im wesentlichen quaderförmiges Anschlußstück 62 an dem Pendelteil 40 der Fast-Tool-Anordnung 36 befestigt werden kann. Zwischen der Grundplatte 60 und dem Anschlußstück 62 ist eine runde Scheibe 64 eingefügt (oder ggf. einstückig mit dem Anschlußstück 62 ausgebildet), die am Außenumfang mit einer Ringnut 66 versehen ist, welche der Befestigung des in den Fig. 1 und 2 gezeigten Faltenbalgs 42 am Werkzeughalter 44 dient.

Ausgehend von der in Fig. 3 oberen Stirnfläche 67 der Grundplatte 60 werden zwei gestufte Aussparungen 68 in derselben sowie damit und zueinander ausgefluchtete Durchgangsbohrungen (nicht dargestellt) in der Scheibe 64 und dem Anschlußstück 62 von jeweils einer Befestigungsschraube 70 durchgriffen, von denen in den Fig. 3 und 6 zur Vereinfachung der Darstellung nur die Schraubenköpfe gezeigt sind. Die Länge der Befestigungsschrauben 70 ist derart bemessen, daß diese in den Fig. 4 und 5 nach unten über das Anschlußstück 62 vorstehen können (nicht gezeigt), um mit ihren vorstehenden Gewindeabschnitten in zugeordnete Gewindebohrungen (nicht dargestellt) im Pendelteil 40 der Fast-Tool-Anordnung 36 eingeschraubt zu werden. Auf diese Art und Weise wird der Werkzeughalter 44 gegen das Pendelteil 40 der Fast-Tool-Anordnung 36 gezogen, um Werkzeughalter 44 und Pendelteil 40 lösbar miteinander zu verbinden. Im dargestellten Ausführungsbeispiel ist die dem Pendelteil 40 zugewandte Stirnfläche des Anschlußstücks 62 mit einer Profilierung in Form einer Verzahnung 72 versehen, die mit einer komplementär geformten Profilierung bzw. Verzahnung (nicht gezeigt) am in den Bearbeitungsbereich 14 der Maschine 10 vorstehenden Ende des Pendelteils 40 eingreift, um den Werkzeughalter 44 auch formschlüssig am Pendelteil 40 festzulegen.

Auf der vom Anschlußstück 62 abgewandten Seite der Grundplatte 60 sind zwei in einer Richtung quer zu der Bewegungsrichtung (F-Achse) des Pendelteils 40 voneinander beabstandete Aufnahmen 74, 76 angeordnet, von denen eine (74) der Befestigung des Drehmeißels 46 dient, während die andere (76) im dargestellten Ausführungsbeispiel für die Befestigung des Gravierstichels 48 vorgesehen ist.

Jede Aufnahme 74, 76 weist einen im Querschnitt gesehen (vgl. die Fig. 3 und 4) im wesentlichen L-förmigen Halterbock 78, 80 auf, der an der jeweils zugeordneten Seitenfläche 82, 84 der Grundplatte 60 längsverschiebbar geführt ist. Hierbei greift ein auf der Unterseite des jeweiligen Halterbocks 78, 80 angebrachter Vorsprung (nicht dargestellt) in eine jeweils zugeordnete, in die Stirnfläche 67 der Grundplatte 60 parallel zu den Seitenflächen 82, 84 eingebrachte Längsnut (ebenfalls nicht gezeigt) ein. Für die Verstellung des jeweiligen Halterbocks 78, 80 ist an besagtem Vorsprung ein Innengewinde oder eine Mutter (beides nicht dargestellt) angebracht, das/die mit einer jeweils zugeordneten, ein Differentialgewinde aufweisenden Gewindespindel 86, 88 zusammenwirkt, welche sich jeweils parallel zu der Stirnfläche 67 und den Seitenflächen 82, 84 der Grundplatte 60 durch letztere hindurcherstreckt und in dieser auf geeignete Weise drehbar gelagert ist.

Es ist ersichtlich, daß der jeweilige Halterbock 78, 80 somit durch ein Verdrehen der jeweils zugeordneten Gewindespindel 86, 88 entlang der jeweiligen Seitenfläche 82, 84 der Grundplatte 60 verschoben werden kann. Im Ergebnis sind die Halterböcke 78, 80 bezüglich der Grundplatte 60 wahlweise individuell und parallel zueinander längsverschiebbar, so daß die Höhenlage der Schneidkante 54 des Drehmeißels 46 bzw. des im wesentlichen punktförmigen Endes 50 des Gravierstichels 48 bezüglich einer durch die B-Achse und die X-Achse der Maschine 10 aufgespannten Ebene individuell justiert werden kann. In seiner jeweiligen Höhenposition kann der Halterbock 78 bzw. 80 dann mittels den jeweiligen Halterbock 78, 80 durchgreifender Klemmschrauben 90 gegenüber der Grundplatte 60 fixiert bzw. festgeklemmt werden.

Die Aufnahmen 74, 76 sind ferner zur lösbaren Befestigung des Drehmeißels 46 bzw. des Gravierstichels 48 ausgebildet. Zu diesem Zweck weist jede Aufnahme 74, 76 eine ausgehend von ihrer in den Fig. 3 bis 5 oberen Stirnfläche in den Halterbock 78 bzw. 80 eingebrachte Aufnahmebohrung 92, 94 auf, in der der Drehmeißel 46 mit seinem Schaft bzw. der Gravierstichel 48 mit seinem Grundkörper 56 lösbar geklemmt ist. Zur Klemmung der Werkzeuge 46, 48 ist jeweils eine Klemmschraube 96 vorgesehen, die in eine zugeordnete Gewindebohrung 98 bzw. 100 im jeweiligen Halterbock 78 bzw. 80 eingeschraubt ist, welche senkrecht zur Aufnahmebohrung 92 bzw. 94 verläuft und in dieser endet.

Die an sich bekannte Drehbearbeitung des Brillenglases L auf der Maschine 10 wurde weiter oben schon hinreichend beschrieben. Unmittelbar anschließend an die Drehbearbeitung kann das Brillenglas L auf seiner Rezeptfläche R mittels des von der Fast-Tool-Anordnung 36 über den Werkzeughalter 44 angetriebenen Gravierstichels 48 graviert werden. Dessen Lage bezüglich der Werkstückspindel 24, genauer die Lage des im wesentlichen punktförmigen Endes 50 des Gravierstichels 48 in Bezug auf die Werkstück-Drehachse B der Werkstückspindel 24 wurde vorher auf eine dem Fachmann geläufige Art und Weise kalibriert, etwa durch Anbringen geeigneter Probemarkierungen auf einem in der Werkstückaufnahme 28 gehaltenen Teststück (nicht dargestellt) bei verschiedenen Winkelstellungen des Teststücks um die Werkstück-Drehachse B und entsprechender Höhenjustage der Aufnahme 76 für den Gravierstichel 48 mittels der Gewindespindel 88 im Werkzeughalter 44. Ferner wurde die räumliche Lage des punktförmigen Endes 50 des Gravierstichels 48 in den F- und X-Achsen der Maschine 10 ermittelt, was z.B. ebenfalls unter Zuhilfenahme eines Teststücks sowie der CNC-Antriebs- und Steuerelemente besagter Achsen in dem Fachmann geläufiger Weise erfolgen kann.

Der eigentliche Gravierprozeß läuft nun wie folgt ab. Bekannt sind neben der (relativen) Lage des Endes 50 des Gravierstichels 48 im Koordinatensystem der Maschine 10 die Position, an der die Gravur auf der Rezeptfläche R des Brillenglases L angebracht werden soll, sowie die Geometrie der mittels des Drehmeißels 46 an dem Brillenglas L angearbeiteten Rezeptfläche R. Hieraus werden die (Gravier)Positionen für die X- und B-Achsen berechnet. Die Positionen in den X- und B-Achsen ergeben sich aus den Polarkoordinaten der anzubringenden Gravur bezüglich der Drehachse des Brillenglases L und dessen Horizontalen, d.h. die Werkstückspindel 24 wird mittels des X-Schlittens 20 in der X-Achse entsprechend dem radialen Abstand der anzubringenden Gravur bezüglich der Drehachse des Brillenglases L definiert linear verfahren, während die Werkstückspindel 24 um die Werkstück-Drehachse B entsprechend der Winkellage der anzubringenden Gravur bezüglich der Drehachse und Horizontalen des Brillenglases L definiert gedreht wird. Die definierte Zustellung des Gravierstichels 48 in der F-Achse erfolgt entsprechend der aus den obigen Angaben ebenfalls bekannten Dicke des Brillenglases L an der Stelle der Rezeptfläche R, an der die Gravur angebracht werden soll. Die Tiefe der Gravur läßt sich dabei durch eine geeignete (Mehr)Zustellung des Gravierstichels 48 in der F-Achse einstellen.

Wie eingangs bereits erwähnt, kann der Gravierstichel 48 nun mittels der Fast-Tool-Anordnung 36 über den Werkzeughalter 44 hochdynamisch in Richtung des Brillenglases L und davon weg bewegt werden, wobei das Ende 50 des Gravierstichels 48 vorzugsweise nadelnd, also wie ein Specht an einem Baum in schneller Abfolge auf die Rezeptfläche R auftrifft, während der Auftreffpunkt durch Positionieren des Brillenglases L in den X- und B-Achsen entsprechend dem zu erzeugenden Gravurbild geändert wird. Hierbei kann der Gravierstichel 48 reziprozierende Hubbewegungen mit z.B. einer Frequenz zwischen 10 und 200 Hz ausführen. In Abhängigkeit von den dynamischen Möglichkeiten der Fast-Tool-Anordnung 36 und dem Werkstoff des Brillenglases L kann jedoch auch mit höheren Frequenzen graviert werden, beispielsweise 700 Hz oder höher.

Alternativ zu der nadelnden Gravierbearbeitung kann der Gravierstichel 48 aber auch so eingesetzt werden, daß das Brillenglas L in einer Position des Gravierstichels 48, in der dessen Ende 50 mit der Rezeptfläche R in Kontakt ist, in den X- und B-Achsen verfahren wird, ohne daß der Gravierstichel 48 eine nadelnde Bewegung ausführt, so daß ein Gravurbild "ritzend" bzw. "kratzend" erzeugt wird.

Die Fig. 7 zeigt beispielhaft eine mittels der vorbeschriebenen Maschine 10 gravierte Rezeptfläche R des Brillenglases L, wobei die in Fig. 7 lotrecht aufeinanderstehenden gestrichelten Linien nicht zu der Gravur gehören, sondern lediglich dazu dienen, die Position eines Teils der Gravur zu erläutern. Bei der gezeigten Rezeptfläche R handelt es sich um eine Gleitsichtfläche mit der gemäß DIN EN ISO 8980-2 erforderlichen Permanentgravur, die zur Ausrichtung zunächst zwei z.B. kreisrunde, um 34 mm beabstandete Markierungen 102, 104 auf der durch den Glasmittelpunkt gehenden Glashorizontalen aufweist, wobei letzterer genau in der Mitte zwischen den beiden Markierungen 102, 104 liegt. Unterhalb der in Fig. 7 linken Markierung 102 befindet sich die Angabe der Nahzusatzwirkung 106, im vorliegenden Beispiel 2.00 Dioptrien, während das Brillenglas L unterhalb der in Fig. 7 rechten Markierung 104 mit "R" für rechts gekennzeichnet ist. Bei 108 ist schließlich eine Herstellerangabe, im vorliegenden Beispiel "^{S}_{L}" eingraviert. Darüber hinaus sind am Rand der Rezeptfläche R des Brillenglases L drei Striche 110 eingraviert, die mittelbar den Zentrierpunkt ZP des Brillenglases L kennzeichnen, der sich ergibt, wenn die in Fig. 7 seitlichen Striche 110 mit einer Linie verbunden werden, von der ein senkrechtes Lot auf den in Fig. 7 unteren Strich 110 gefällt wird (in Fig. 7 mit gestrichelten Linien angedeutet). Dieser Zentrierpunkt ZP dient später dem Positionieren des Brillenglases L zur Randbearbeitung gemäß der Form des Brillengestells.

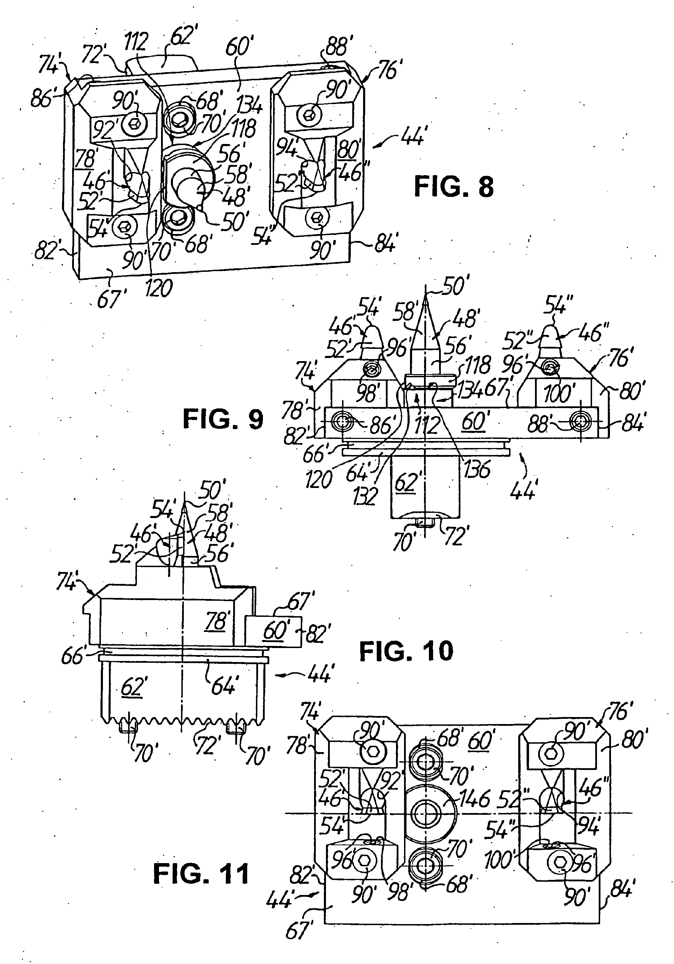

Den Fig. 8 bis 15 sind Details eines Werkzeughalters 44' in einer zu der bisher beschriebenen Ausführungsform alternativen Ausgestaltung zu entnehmen, wobei gleiche oder entsprechende Teile mit denselben Bezugszeichen versehen wurden, ergänzt um einen hochgestellten Strich (" ' "). Der Werkzeughalter 44' in der alternativen Ausgestaltung soll nachfolgend nur insoweit beschrieben, als er sich von dem unter Bezugnahme auf die Fig. 1 bis 6 beschriebenen Werkzeughalter 44 unterscheidet; im übrigen wird auf die Vorbeschreibung verwiesen.

Bei dem alternativ ausgestalteten Werkzeughalter 44' ist zunächst die zweite Aufnahme 76' anders bestückt als bei dem vorbeschriebenen Werkzeughalter 44, nämlich mit einem zweiten Drehmeißel 46''. Die Drehmeißel 46', 46'' können sich hinsichtlich Schneidenwerkstoff und/oder Schneidengeometrie unterscheiden, z.B. derart, daß ein Vordrehen der Rezeptfläche R des Brillenglases L mittels des in den Fig. 8, 9, 11, 12 und 15 linken Drehmeißels 46' erfolgen kann, der ein Schneidplättchen 52' aus PKD oder Hartmetall aufweist, während ein sich an das Vordrehen anschließendes Fertigdrehen der Rezeptfläche R des Brillenglases L mittels des in den Fig. 8, 9, 11, 12 und 15 rechten Drehmeißels 46" ausgeführt werden kann, der ein Schneidplättchen 52" aus Naturdiamant aufweist. Wenn eine Aufteilung der Drehbearbeitung in Vordrehen und Fertigdrehen vorgesehen werden soll, können diese Bearbeitungsschritte also unmittelbar aufeinanderfolgend in ein und demselben Bearbeitungsbereich 14 durchgeführt werden, ohne daß zwischenzeitlich an der Maschine 10 ein Werkzeugwechsel durchgeführt werden müßte.

Bei dem Werkzeughalter 44' ist ferner zwischen den Befestigungsschrauben 70' eine weitere Aufnahme 112 an der Grundplatte 60' vorgesehen, die anders ausgebildet ist als die Aufnahmen 74', 76' und wahlweise der lösbaren Befestigung des Gravierstichels 48' oder eines Tasters 114 dient, wobei eine selbstzentrierende kinematische Kupplung 116 zum Einsatz kommt, die nachfolgend noch näher beschrieben wird.

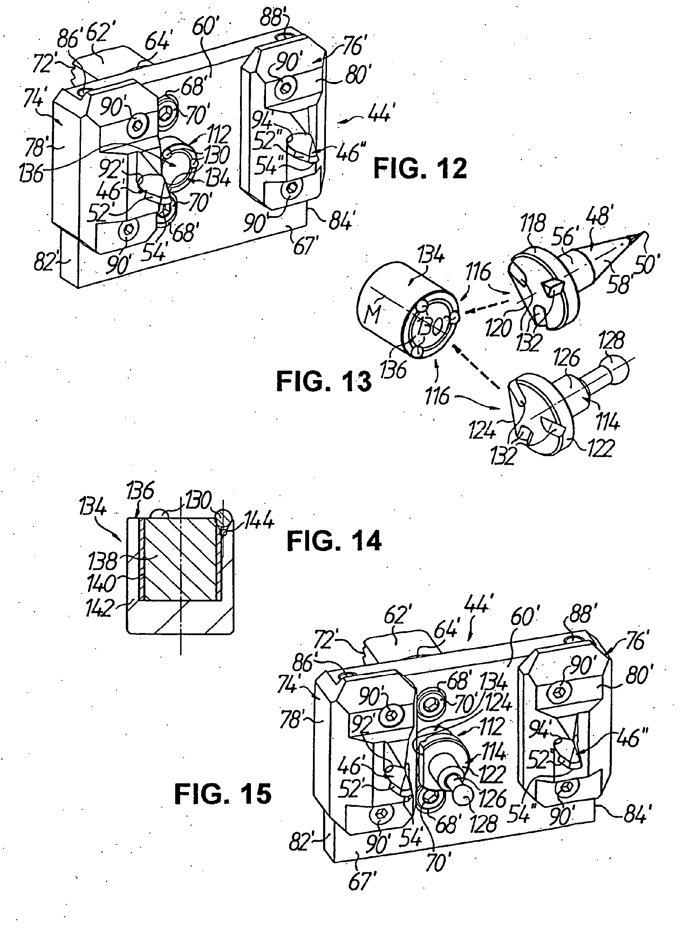

In Fig. 13 sind der Gravierstichel 48' und der Taster 114 vom Werkzeughalter 44' getrennt gezeigt. Der Gravierstichel 48' unterscheidet sich von dem vorbeschriebenen Gravierstichel 48 im wesentlichen dahingehend, daß er an seinem halterseitigen Ende eine in der Draufsicht gesehen allgemein kreisförmige Halteplatte 118 aufweist, an der der Grundkörper 56' befestigt ist und die zur Winkelorientierung am Halterbock 78' der in den Fig. 8, 9, 11, 12 und 15 linken Aufnahme 74' mit einer seitlichen Abflachung 120 versehen ist.

Auch der Taster 114 weist eine in der Draufsicht gesehen allgemein kreisförmige Halteplatte 122 mit einer seitlichen Abflachung 124 zur Winkelorientierung auf. An der Halteplatte 122 ist ein gestufter Zylinderschaft 126 befestigt (oder einstückig mit der Halteplatte 122 ausgebildet), der auf seiner von der Halteplatte 122 abgewandten Seite mit einem Kugelkopf 128 endet. Der Taster 114 dient der Geometrieerfassung am Brillenglas L bzw. am Brillenglasrohling unter Zuhilfenahme der an den Bewegungsachsen (F und X) ohnehin vorhandenen CNC-Meßtechnik, vergleichbar einer Koordinatenmeßmaschine, und ist -- wie der Gravierstichel 48' -- zweckmäßig bei der Drehbearbeitung vom Werkzeughalter 44' abgenommen (vgl. Fig. 12). Der Taster 114 kann z.B. zum Kalibrieren der Drehwerkzeuge eingesetzt werden, wie es etwa in der EP-A-1 719 584 derselben Anmelderin beschrieben ist.

Details zu der selbstzentrierenden kinematischen Kupplung 116 sind nun insbesondere den Fig. 13 und 14 zu entnehmen. Demgemäß weist die kinematische Kupplung 116 drei Kugelkörper 130, drei Prismennuten 132 mit im dargestellten Ausführungsbeispiel im wesentlichen dreieckigen Nutquerschnitt und ein eine Haltekraft erzeugendes Element, im gezeigten Ausführungsbeispiel eine Topfmagneteinrichtung 134 auf. Wie insbesondere in Fig. 13 gut zu erkennen ist, sind die Kugelkörper 130 unter 120° bezüglich einer Mittelachse M der Aufnahme 112 versetzt in einer Befestigungsfläche 136 der Aufnahme 112 eingelassen und stehen über diese vor, um mit den gleichermaßen, d.h. um 120° winkelbeabstandeten Prismennuten 132 in der Halteplatte 118 des Gravierstichels 48' oder der Halteplatte 122 des Tasters 114 einzugreifen, wobei die Topfmagneteinrichtung 134 den Gravierstichel 48' bzw. den Taster 114 lösbar in diesem Eingriff hält, wozu wenigstens die Halteplatten 118, 122 des Gravierstichels 48' bzw. des Tasters 114 aus einem ferromagnetischen Material (z.B. gehärteter Stahl) bestehen.

Einzelheiten zu der Topfmagneteinrichtung 134 sind schließlich in Fig. 14 gezeigt. Demgemäß weist die Topfmagneteinrichtung 134 einen Permanentmagneten 138 von zylindrischer Bauform auf, der in einem hohlzylindrischen Rohrabschnitt 140 aus nichtmagnetischem Material eingelassen ist. Der Permanentmagnet 138 und der Rohrabschnitt 140 wiederum sind in einem becherförmigen Mantel oder Topf 142 aus ferromagnetischem Material eingelassen. Die in Fig. 14 oberen Stirnflächen des Permanentmagneten 138, des Rohrabschnitts 140 und des Topfes 142 bilden die planebene Befestigungsfläche 136 der Aufnahme 112. Diese Ausgestaltung der Topfmagneteinrichtung 134 sorgt für eine vergleichsweise große Magnethaltekraft, was darauf zurückzuführen ist, daß über den Topf 142 ein direkter Magnetfluß zwischen Nord-und Südpol des Permanentmagneten 138 zustande kommen kann und magnetische Streufelder weitestgehend vermieden werden. In Fig. 14 ist auch zu erkennen, daß ausgehend von der Befestigungsfläche 136 im wesentlichen kegelförmige Bohrungen 144 in die Topfmagneteinrichtung 134 eingebracht sind, in die die Kugelkörper 130 z.B. mittels eines 2-Komponenten-Epoxydharzes eingeklebt sind. Die Topfmagneteinrichtung 134 selbst wiederum ist in einer gestuften Bohrung 146 in der Grundplatte 60' des Werkzeughalters 44' (siehe die Fig. 11) befestigt, vorzugsweise in dieser eingeklebt.

Im Ergebnis kann sowohl der Gravierstichel 48' als auch der Taster 114 stets reproduzierbar und in gleicher Stellung gegenüber der Grundplatte 60' und bezüglich der Drehmeißel 46' auf den Werkzeughalter 44' aufgesetzt werden. Trotz sehr hoher Haltekräfte der Topfmagneteinrichtung 134 ist es möglich, den Gravierstichel 48' bzw. den Taster 114 durch seitliches "Abkippen" vom Werkzeughalter 44' zu entfernen.

Wenngleich in der obigen Beschreibung der Werkzeughalter 44, 44' im Einsatz an einer Maschine 10 beschrieben wurde, die lediglich eine Fast-Tool-Anordnung 36 und zudem optional eine Fräseinheit 32 aufweist -- entsprechend der DE-A-10 2005 021 638 derselben Anmelderin -- kann der Werkzeughalter 44, 44' natürlich auch an Maschinen zum Einsatz kommen, die mehr als eine Fast-Tool-Anordnung, ggf. wenigstens eine Frässpindel auch zur Flächenbearbeitung und/oder mehrere Werkstückspindeln aufweisen, wie sie etwa in der DE-A-10 2005 021 640 bzw. der EP-A-1 719 582 derselben Anmelderin beschrieben werden. Ist in diesem Fall die Anordnung der Maschine so getroffen, daß die Fast-Tool-Bewegungsebene bezüglich der die Werkstück-Drehachse enthaltenden Ebene um einen vorbestimmten Winkel schräggestellt ist, was -- wie in der DE-A-10 2005 021 640 derselben Anmelderin detailliert beschrieben -- eine einfache Höhenjustage der Drehmeißel-Schneidkante bezüglich der Rotationsachse der Werkstückspindel ermöglicht, kann die vorbeschriebene, sich der jeweiligen Gewindespindel 86, 88 bzw. 86', 88' bedienende Höhenjustagemöglichkeit für die Aufnahmen 74, 76 bzw. 74', 76' am Werkzeughalter 44, 44' auch entfallen, so daß die jeweilige Aufnahme fest, d.h. unbeweglich an der Grundplatte 60 bzw. 60' angebracht wäre. Die Höhenjustage des im wesentlichen punktförmigen Endes 50 des Gravierstichels 48 bezüglich der Werkstück-Drehachse B könnte dann analog der Höhenjustage der Schneidkante des Drehmeißels erfolgen, wie sie in der DE-A-10 2005 021 640 derselben Anmelderin beschrieben wird.

Es wird eine Maschine zur Bearbeitung von insbesondere Kunststoff-Brillengläsern als Werkstücke offenbart, mit einer Werkstückspindel, mittels der das Werkstück um eine Werkstück-Drehachse drehend antreibbar ist, und einer Fast-Tool-Anordnung, mittels der ein Drehmeißel in Richtung des Werkstücks und davon weg bewegbar ist, wobei die Werkstückspindel und die Fast-Tool-Anordnung zudem in einer Richtung quer zur Werkstück-Drehachse relativ zueinander bewegbar sind. Erfindungsgemäß ist ein mit der Fast-Tool-Anordnung wirkverbundener Werkzeughalter vorgesehen, der den Drehmeißel und von diesem in der Richtung quer zur Werkstück-Drehachse beabstandet einen Gravierstichel trägt, dessen dem Werkstück zugewandtes Ende im wesentlichen punktförmig ist. Der Gravierstichel ist mittels der Fast-Tool-Anordnung über den Werkzeughalter hochdynamisch in Richtung des Werkstücks und davon weg bewegbar, so daß insbesondere durch nadelnden Eingriff des Gravierstichels mit dem Werkstück an diesem eine Markierung erzeugbar ist.

### BEZUGSZEICHENLISTE

- 10: Maschine
- 12: Maschinengestell
- 14: Bearbeitungsbereich
- 16: Führungsschiene
- 18: Montagefläche
- 20: X-Schlitten
- 22: Montagefläche
- 24: Werkstückspindel
- 26: Elektromotor
- 28: Werkstückaufnahme
- 30: Montagefläche
- 32: Fräseinheit
- 34: Fräswerkzeug
- 36: Fast-Tool-Anordnung
- 38: Aktuator
- 40: Pendelteil
- 42: Faltenbalg
- 44: Werkzeughalter
- 46: Drehmeißel
- 48: Gravierstichel
- 50: Ende
- 52: Schneidplättchen
- 54: Schneidkante
- 56: Grundkörper
- 58: Spitze
- 60: Grundplatte
- 62: Anschlußstück
- 64: Scheibe
- 66: Ringnut
- 67: Stirnfläche
- 68: Aussparung
- 70: Befestigungsschraube
- 72: Verzahnung
- 74: Aufnahme
- 76: Aufnahme
- 78: Halterbock
- 80: Halterbock
- 82: Seitenfläche
- 84: Seitenfläche
- 86: Gewindespindel
- 88: Gewindespindel
- 90: Klemmschraube
- 92: Aufnahmebohrung
- 94: Aufnahmebohrung
- 96: Klemmschraube
- 98: Gewindebohrung
- 100: Gewindebohrung
- 102: Markierung
- 104: Markierung
- 106: Nahzusatzwirkung
- 108: Herstellerangabe
- 110: Strich
- 112: Aufnahme
- 114: Taster
- 116: kinematische Kupplung
- 118: Halteplatte
- 120: Abflachung
- 122: Halteplatte
- 124: Abflachung
- 126: Zylinderschaft
- 128: Kugelkopf
- 130: Kugelkörper
- 132: Prismennut
- 134: Topfmagneteinrichtung
- 136: Befestigungsfläche
- 138: Permanentmagnet
- 140: Rohrabschnitt
- 142: Topf
- 144: kegelförmige Bohrung
- 146: gestufte Bohrung

- B: Werkstück-Drehachse
- F: Linearachse Fast-Tool
- L: Werkstück / Brillenglas
- M: Mittelachse
- R: Rezeptfläche
- X: Linearachse Werkstück
- ZP: Zentrierpunkt

## Patentansprüche

1. Maschine (10) zur Bearbeitung von optischen Werkstücken (L), insbesondere von Kunststoff-Brillengläsern, mit einer Werkstückspindel (24), mittels der das Werkstück (L) um eine Werkstück-Drehachse (B) drehend antreibbar ist, und einer Fast-Tool-Anordnung (36), mittels der ein Drehmeißel (46; 46') in Richtung des Werkstücks (L) und davon weg bewegbar ist, wobei die Werkstückspindel (24) und die Fast-Tool-Anordnung (36) zudem in einer Richtung quer zur Werkstück-Drehachse (B) relativ zueinander bewegbar sind (X-Achse), **gekennzeichnet durch** einen mit der Fast-Tool-Anordnung (36) wirkverbundenen Werkzeughalter (44; 44'), der den Drehmeißel (46; 46') und von diesem in der Richtung quer zur Werkstück-Drehachse (B) beabstandet einen Gravierstichel (48; 48') trägt, dessen dem Werkstück (L) zugewandtes Ende (50; 50') im wesentlichen punktförmig ist, wobei der Gravierstichel (48; 48') mittels der Fast-Tool-Anordnung (36) über den Werkzeughalter (44; 44') hochdynamisch in Richtung des Werkstücks (L) und davon weg bewegbar ist, so daß insbesondere **durch** nadelnden Eingriff des Gravierstichels (48; 48') mit dem Werkstück (L) an diesem eine Markierung (102-110) erzeugbar ist.

2. Maschine (10) nach Anspruch 1, **dadurch gekennzeichnet, daß** der Gravierstichel (48; 48') mittels der Fast-Tool-Anordnung (36) über den Werkzeughalter (44; 44') lagegeregelt (F-Achse) in axialer Richtung zustellbar ist.

3. Maschine (10) nach Anspruch 1 oder 2, **dadurch gekennzeichnet, daß** der Gravierstichel (48; 48') eine sich zu seinem dem Werkstück (L) zugewandten Ende (50; 50') hin im wesentlichen kegelförmig verjüngende Spitze (58; 58') aufweist.

4. Maschine (10) nach einem der vorhergehenden Ansprüche, **dadurch gekennzeichnet, daß** die Spitze (58; 58'), die das dem Werkstück (L) zugewandte Ende (50; 50') des Gravierstichels (48; 48') ausbildet, aus Hartmetall besteht.

5. Maschine (10) nach einem der vorhergehenden Ansprüche, **dadurch gekennzeichnet, daß** der Werkzeughalter (44; 44') eine Grundplatte (60; 60'), die an einem Pendelteil (40) der Fast-Tool-Anordnung (36) der Maschine (10) befestigbar ist, und wenigstens zwei in einer Richtung quer zu einer Bewegungsrichtung (F-Achse) des Pendelteils (40) beabstandet an der Grundplatte (60; 60') angeordnete Aufnehmen (74, 76; 74', 76', 112) aufweist, von denen eine der Befestigung des Drehmeißels (46; 46') dient, während die andere der Befestigung des Gravierstichels (48; 48') dient.

6. Maschine (10) nach Anspruch 5, **dadurch gekennzeichnet, daß** die Aufnahmen (74, 76; 74', 76', 112) zur lösbaren Befestigung des Drehmeißels (46; 46') bzw. des Gravierstichels (48, 48') ausgebildet sind.

7. Maschine (10) nach Anspruch 5 oder 6, **dadurch gekennzeichnet, daß** wenigstens die Aufnahme (74; 74') für den Drehmeißel (46; 46') höhenverstellbar bezüglich einer Ebene, in der das Pendelteil (40) bewegbar ist, an der Grundplatte (60; 60') angebracht ist.

8. Maschine (10) nach Anspruch 7, **dadurch gekennzeichnet, daß** die Aufnahmen (74, 76; 74', 76') jeweils einen Halterbock (78, 80; 78', 80') aufweisen, wobei die Halterböcke (78, 80; 78', 80') bezüglich der Grundplatte (60; 60') wahlweise für Höhenjustagezwecke individuell und parallel zueinander längsverschiebbar sind.

9. Maschine (10) nach einem der Ansprüche 6 bis 8, **dadurch gekennzeichnet, daß** die Aufnahmen (74, 76; 74', 76') jeweils eine Aufnahmebohrung (92, 94; 92', 94') aufweisen, in der der Drehmeißel (46; 46') bzw. der Gravierstichel (48) lösbar geklemmt ist.

10. Maschine (10) nach einem der Ansprüche 5 bis 9, **dadurch gekennzeichnet, daß** der Gravierstichel (48') an der Aufnahme (112) zur Befestigung des Gravierstichels (48') mittels einer selbstzentrierenden kinematischen Kupplung (116) anbringbar ist.

11. Maschine (10) nach Anspruch 10, **dadurch gekennzeichnet, daß** die selbstzentrierende kinematische Kupplung (116) drei Kugelkörper (130), drei Prismennuten (132) und ein eine Haltekraft erzeugendes Element (134) aufweist, wobei die Kugelkörper (130) unter 120° bezüglich einer Mittelachse (M) der Aufnahme (112) versetzt in einer Befestigungsfläche (136) der Aufnahme (112) eingelassen sind und über diese vorstehen, um mit den gleichermaßen winkelbeabstandeten Prismennuten (132) in einer Halteplatte (118, 122) des Gravierstichels (48') einzugreifen, und wobei das die Haltekraft erzeugende Element (134) den Gravierstichel (48') lösbar in diesem Eingriff hält.

12. Maschine (10) nach Anspruch 11, **dadurch gekennzeichnet, daß** das die Haltekraft erzeugende Element (134) einen Magneten, insbesondere einen Permanentmagneten (138) aufweist.

## Claims

1. Machine (10) for machining optical workpieces (L), in particular plastic spectacle lenses, comprising a workpiece spindle (24), by means of which the workpiece (L) can be driven in rotation about a workpiece rotation axis (B), and a fast tool arrangement (36), by means of which a turning tool (46; 46') can be moved in the direction of the workpiece (L) and away therefrom, wherein the workpiece spindle (24) and the fast tool arrangement (36) can moreover be moved relative to one another (X-axis) in a direction transverse to the workpiece rotation axis (B), **characterized by** a tool holder (44; 44') which is actively connected to the fast tool arrangement (36) and which carries the turning tool (46; 46') and, at a distance therefrom in the direction transverse to the workpiece rotation axis (B), an engraving tool (48; 48'), of which the end (50; 50') facing towards the workpiece (L) is essentially point-shaped, wherein the engraving tool (48; 48') can be moved in the direction of the workpiece (L) and away therefrom in a highly dynamic manner by means of the fast tool arrangement (36) via the tool holder (44; 44'), so that a marking (102-110) can be produced on the workpiece (L) in particular by needling engagement of the engraving tool (48; 48') with said workpiece (L).

2. Machine (10) according to claim 1, **characterized in that** the engraving tool (48; 48') can be moved in the axial direction in a positionally controlled manner (F-axis) by means of the fast tool arrangement (36) via the workpiece holder (44; 44').

3. Machine (10) according to claim 1 or 2, **characterized in that** the engraving tool (48; 48') has a tip (58; 58') which tapers in an essentially cone-shaped manner towards its end (50; 50') facing towards the workpiece (L).

4. Machine (10) according to one of the preceding claims, **characterized in that** the tip (58; 58'), which forms the end (50; 50') of the engraving tool (48; 48') facing towards the workpiece (L), is made of carbide.

5. Machine (10) according to one of the preceding claims, **characterized in that** the tool holder (44; 44') comprises a base plate (60; 60'), which can be fixed to a pendulum part (40) of the fast tool arrangement (36) of the machine (10), and at least two mounts (74, 76; 74', 76', 112) arranged on the base plate (60; 60') spaced apart from one another in a direction transverse to a movement direction (F-axis) of the pendulum part (40), one of which mounts serves to fix the turning tool (46; 46') while the other serves to fix the engraving tool (48; 48').

6. Machine (10) according to claim 5, **characterized in that** the mounts (74, 76; 74', 76', 112) are designed for releasably fixing the turning tool (46; 46') and the engraving tool (48) respectively.

7. Machine (10) according to claim 5 or 6, **characterized in that** at least the mount (74; 74') for the turning tool (46; 46') is attached to the base plate (60; 60') in a height-adjustable manner with respect to a plane in which the pendulum part (40) can be moved.

8. Machine (10) according to claim 7, **characterized in that** the mounts (74, 76; 74', 76') in each case have a holder block (78, 80; 78', 80'), wherein the holder blocks (78, 80; 78', 80') can selectively be displaced in the longitudinal direction individually and parallel to one another with respect to the base plate (60; 60') for height adjustment purposes.

9. Machine (10) according to one of claims 6 to 8,
**characterized in that** the mounts (74, 76; 74', 76') in each case have a receiving bore (92, 94; 92', 94'), in which the turning tool (46; 46') and the engraving tool (48) respectively is releasably clamped.

10. Machine (10) according to one of claims 5 to 9, **characterized in that** the engraving tool (48') can be attached to the mount (112) for fixing the engraving tool (48') by means of a self-centering kinematic coupling (116).

11. Machine (10) according to claim 10, **characterized in that** the self-centering kinematic coupling (116) comprises three spherical bodies (130), three prism grooves (132) and an element (134) which generates a retaining force, wherein the spherical bodies (130) are incorporated in a fixing face (136) of the mount (112) in a manner offset by 120° with respect to a center axis (M) of the mount (112) and protrude beyond said fixing face in order to engage with the prism grooves (132) that are spaced apart by the same angle in a holding plate (118, 122) of the engraving tool (48'), and wherein the element (134) which generates the retaining force keeps the engraving tool (48') releasably in this engagement.

12. Machine (10) according to claim 11, **characterized in that** the element (134) which generates the retaining force comprises a magnet, in particular a permanent magnet (138).

## Revendications

1. Machine (10) pour l'usinage de pièces optiques (L), en particulier de verres de lunettes en matière plastique, comprenant une broche à pièce (24) au moyen de laquelle la pièce à oeuvrer (L) peut être entraînée en rotation autour d'un axe de pièce (B), et un agencement à outil rapide (36), au moyen duquel un outil de tournage (46 ; 46') est déplaçable en direction de la pièce à oeuvrer (L) et en éloignement de celle-ci, ladite broche à pièce (24) et ledit agencement à outil rapide (36) étant en outre déplaçables l'un par rapport à l'autre dans une direction perpendiculaire à l'axe de rotation (B) de la pièce à oeuvrer (axe X),
**caractérisée par** un porte-outil (44 ; 44') coopérant avec l'agencement à outil rapide (36), qui porte l'outil de tournage (46 ; 46') et un poinçon de gravure (48 ; 48') à distance de ce dernier dans la direction perpendiculaire à l'axe de rotation (B) de la pièce à oeuvrer, l'extrémité (50 ; 50') du poinçon de gravure tournée vers la pièce à oeuvrer (L) étant essentiellement de forme ponctuelle, ledit poinçon de gravure (48 ; 48') étant déplaçable au moyen de l'agencement à outil rapide (36) via le porte-outil (44 ; 44') avec une dynamique élevée en direction de la pièce à oeuvrer (L) de sorte qu'un marquage (102-110) peut être produit sur la pièce à oeuvrer (L) en particulier par engagement du poinçon de gravure (48 ; 48') avec la pièce à oeuvrer (L) à la manière d'un clou.

2. Machine (10) selon la revendication 1, **caractérisée en ce que** le poinçon de gravure (48 ; 48') est susceptible d'être approché au moyen de l'agencement à outil rapide (36) via le porte-outil (44 ; 44') en direction axiale et avec régulation de position (axe F).

3. Machine (10) selon la revendication 1 ou 2, **caractérisée en ce que** le poinçon de gravure (48 ; 48') présente une pointe (58 ; 58') qui va en se rétrécissant sensiblement sous forme conique vers son extrémité (50 ; 50') tournée vers la pièce à oeuvrer (L).

4. Machine (10) selon l'une des revendications précédentes, **caractérisée en ce que** la pointe (58 ; 58'), qui forme l'extrémité (50 ; 50') du poinçon de gravure (48 ; 48') tournée vers la pièce à oeuvrer (L) est en un métal dur.

5. Machine (10) selon l'une des revendications précédentes, **caractérisée en ce que** le porte-outil (44 ; 44') comprend une plaque de base (60 ; 60'), susceptible d'être fixée sur une partie pendulaire (40) de l'agencement à outil rapide (36) de la machine (10), et au moins deux logements (74, 76 ; 74', 76', 112), ménagés dans la plaque de base (60 ; 60') et écartés dans une direction perpendiculaire à une direction de déplacement (axe F) de la partie pendulaire (40), l'un des logements servant à la fixation de l'outil de tournage (46 ; 46'), pendant que l'autre sert à la fixation du poinçon de gravure (48 ; 48').

6. Machine (10) selon la revendication 5, **caractérisée en ce que** les logements (74, 76 ; 74', 76', 112) sont réalisés en vue d'une fixation libérable de l'outil de tournage (46 ; 46') ou respectivement du poinçon de gravure (48 ; 48').

7. Machine (10) selon la revendication 5 ou 6, **caractérisée en ce qu'**au moins le logement (74 ; 74') pour l'outil de tournage (46 ; 46') est ménagé sur la plaque de base (60 ; 60') avec possibilité de réglage en hauteur par rapport à un plan dans lequel la partie pendulaire (40) est déplaçable.

8. Machine (10) selon la revendication 7, **caractérisée en ce que** les logements (74, 76 ; 74', 76') présentent chacun un bloc de maintien (78, 80 ; 78', 80'), les blocs de maintien de (78, 80 ; 78', 80') étant mobiles en translation longitudinale de manière sélective par rapport à la plaque de base (60 ; 60') à des fins d'ajustement en hauteur, individuellement et parallèlement l'un par rapport à l'autre.

9. Machine (10) selon l'une des revendications 6 à 8, **caractérisée en ce que** les logements (74, 76 ; 74', 76') présentent chacun un perçage de réception (92, 94 ; 92', 94'), dans lequel l'outil de tournage (46 ; 46') ou le poinçon de gravure (48) est coincé de façon détachable.

10. Machine (10) selon l'une des revendications 5 a 9, **caractérisée en ce que** le poinçon de gravure (48') est susceptible d'être monté dans le logement (112) pour la fixation du poinçon de gravure (48') au moyen d'un accouplement cinématique autocentreur (116).

11. Machine (10) selon la revendication 10, **caractérisée en ce que** l'accouplement cinématique autocentreur (116) comprend trois corps sphériques (130), trois gorges prismatiques (132) et un élément (134) qui produit une force de maintien, les corps sphériques (130) étant intégrés dans une surface de fixation (136) du logement (112) avec un décalage de 120° par rapport à un axe médian (M) du logement (112) et dépassant au-delà de celui-ci, afin de s'engager dans les gorges prismatiques (132), écartées de la même valeur angulaire, dans une plaque de maintien (118, 122) du poinçon de gravure (48'), et **en ce que** l'élément (134) qui produit la force de maintien retient le poinçon de gravure (48') de manière détachable dans cet engagement.

12. Machine (10) selon la revendication 11, **caractérisée en ce que** l'élément (134) qui produit la force de maintien comprend un aimant, en particulier un aimant permanent (138).
